# EUROPÄISCHE PATENTSCHRIFT

(11) **EP 0 618 093 B1**
(45) Veröffentlichungstag und Bekanntmachung des Hinweises auf die Patenterteilung: **27.12.1996**
(21) Anmeldenummer: 94101863.2
(22) Anmeldetag: 08.02.1994
(51) Int. Cl.: B60D 1/02

(54) **Anhänger-Bolzenkupplung**
Trailer bolt coupling
Accouplement à boulon pour remorque

(30) Priorität: 27.03.1993 DE 4310055
(43) Veröffentlichungstag der Anmeldung: 05.10.1994
(73) Patentinhaber: Hunger, Walter, Dr.-Ing. E.h., D-97074 Würzburg (DE)
(72) Erfinder: Hunger, Walter, Dr.-Ing. E.h., D-97074 Würzburg (DE)
(74) Vertreter: Nix, Frank Arnold, Dr.

(56) Entgegenhaltungen:
- EP-A- 0 232 898
- DE-A- 1 009 495
- DE-A- 1 064 359
- US-A- 4 998 745

## Beschreibung

Die vorliegende Erfindung bezieht sich auf eine Anhänger-Bolzenkupplung zur Herstellung einer Zugverbindung zwischen einem Zugfahrzeug und einem Anhänger, dessen Zugstange eine Öse aufweist, die in der Anhängerkupplung von einem in senkrechter Richtung verschieblichen Kupplungsbolzen erfaßt wird.

Meist geschieht die Betätigung des Kupplungsbolzens im Sinne des Freigebens - Verschiebung nach oben - über einen von Hand zu betätigenden Schwenkhebel, wobei dieser auf verschiedene Weisen kinematisch mit dem Kupplungsbolzen gekoppelt ist. Die Betätigung des Kupplungsbolzens nach unten im Sinne des Ankuppelns der Zugstange des Anhängers erfolgt gewöhnlich unter der Wirkung einer Feder, nachdem die in das Fangmaul des Kupplungsgehäuses eintretende Zugstangenöse die Freigabe einer Sperre oder dergl. bewirkt hat.

Als Nachteil dieser Ausbildungen kann angesehen werden die erhebliche Größe der zur Betätigung erforderlichen Kräfte und die Stöße und Schläge, die auf Grund der in den mechanischen Kraftübertragungen wirkenden Reibungskräfte bei der Bedienung auftreten können.

Es ist auch bekannt, die Betätigung des Schwenkhebels durch einen Servomechanismus zu bewirken, meist zum Zwecke der Fernbetätigung. Die DE-OS 29 02 558 zeigt eine solche Ausbildung, bei der an der Schwenkhebelwelle ein Bowdenzug angreift, der von anderer Stelle her durch eine dort vorgesehene Handbetätigung zur Wirkung gebracht werden kann. An den vorgenannten Nachteilen kann dies nichts ändern.

Aus der DE-OS 29 24 359 ist ein elektrischer Antrieb des Kupplungsbolzens einer Anhängerkupplung bekannt, wobei ein Elektromotor über ein Untersetzungszahnradgetriebe und einen Exzenter auf den Kupplungsbolzen wirken soll.

Die Veröffentlichung EP-A1-0 235 094 zeigt einen elektromagnetischen Antrieb in der Weise, daß der Anker eines Elektromagneten bei dessen Erregung eingezogen wird und über einen Kipphebel den Kupplungsbolzen hebt. Diese Antriebe sind schon wegen der Notwendigkeit der Bereitstellung elektrischer Energie nicht einfach und problemlos.

Aus der DE-OS 37 26 823 ist ein durch Druckmittelwirkung nach oben in die Freigabestellung verschiebbarer Kupplungsbolzen bekannt. Allerdings handelt es sich dabei lediglich um einen pneumatischen Drehantrieb für die üblicherweise von Hand betätigte Schwenkhebelwelle, und zwar in der Weise, daß die Kolbenstange des Kolbens eines pneumatischen Druckzylinders als Zahnstange ausgebildet ist, welche mit einem Zahnrad kämmt, das auf dem dem Handschwenkhebel gegenüberliegenden, verlängerten und aus dem Kupplungsgehäuse herausgeführten Ende der Betätigungswelle sitzt. Die gesamte mechanische Kinematik zur Umsetzung der Drehbewegung der Betätigungswelle in die Hubbewegung des Kupplungsbolzens ist die bekannte mit deren Nachteilen. Um den den Kupplungsbolzen in seiner unteren Kupplungsposition sichernden Sicherungsriegel zu betätigen, ist der pneumatische Druckzylinder schwenkbar um die Betätigungswelle gelagert und stützt sich derart auf einen Kopf des Sicherungsriegels, daß die Reaktionskraft des Zahnrades den Druckzylinder um einen kleinen Betrag schwenkt, welcher in eine Löseverschiebung des Sicherungsriegels umgesetzt wird.

Diese Ausbildung ist nicht geeignet, eine anstrengungsfreie, sanfte Handbetätigung zu ermöglichen. Dies ist schon wegen der Kompressibilität des Druckgases und der in den mechanischen Kraftübertragungen herrschenden Reibung nicht zu erwarten. Überdies ist diese Ausbildung wegen der mehrfachen Zwischenglieder zwischen Pneumatikzylinder und Kupplungszapfen konstruktiv aufwendig.

Ähnliches gilt für die Ausbildung gemäß DE-OS 37 23 709, die ebenfalls eine pneumatische Betätigung des Kupplungsbolzens einer Anhängerkupplung in der Weise zeigt, daß die Kolbenstange eines Pneumatikzylinders an einem Sperrhebel schwenkantreibbar angreift, wobei dieser sowohl den Kupplungsbolzen in seiner unteren Kupplungsstellung als erste Sicherung verriegelt, als auch zum Heben des Kupplungsbolzens nach Lösen der Verriegelungsstellung eingerichtet ist. Auch diese Ausbildung eignet sich nicht für eine sanfte, anstrengungsfreie Handbetätigung.

Eine Kupplungsbolzenbetätigung mittels eines Pneumatikzylinders, dessen Achse parallel zur Achse des Kupplungsbolzens verläuft, ist aus der gattungsbildenden EP-A2-0 232 898 bekannt. Hier ist am Ende der Kolbenstange des Pneumatikzylinders ein Querarm ausgebildet, der seitlich am Kupplungsbolzen im Sinne des Hebens, d.h. des Auskuppelns, angreift. Die Abwärtsbewegung in die Kuppelstellung wird durch eine Feder bewirkt. Hier treten auf Grund der Seitenversetzung zwischen Kupplungsbolzen und Pneumatikzylinder Biegemomente auf. Eine Handbetätigung ist auch hier nicht vorgesehen. Außerdem ist die Konstruktion wenig kompakt.

Eine hydraulische Bolzenkupplungsbetätigung mittels eines Hydraulikzylinders, dessen Achse mit der Achse des Kupplungsbolzens zusammenfällt, ist aus der US-PS 3 889 979 bekannt Hier geht es um das Anhängen eines Arbeitswerkzeugs an einen Schlepper und als Kupplungsbolzen dient die Kolbenstange eines oberhalb des Kupplungsbeschlags des Arbeitswerkzeugs aufgehängten doppeltwirkenden Hydraulikzylinders, der von einer komplizierten Kinematik automatisch gesteuert wird. Der Platzbedarf für diese Ausbildung ist groß und deshalb auch nur für landwirtschaftliche Maschinen geeignet. Eine einfache Handbetätigung ist auch hier nicht vorgesehen.

Aufgabe der vorliegenden Erfindung ist die Schaffung einer Anhänger-Bolzenkupplung von einfacher und kompakter Bauart, die eine zuverlässige und bequeme Betätigung des Kupplungsbolzens ohne große Kraftanstrengungen ermöglicht.

Die Lösung der gestellten Aufgabe ist in den Patentansprüchen angegeben.

Die Erfindung wird nachfolgend durch die Beschreibung eines Ausführungsbeispiels an Hand der beigegebenen Zeichnungen weiter erläutert. Es zeigt:

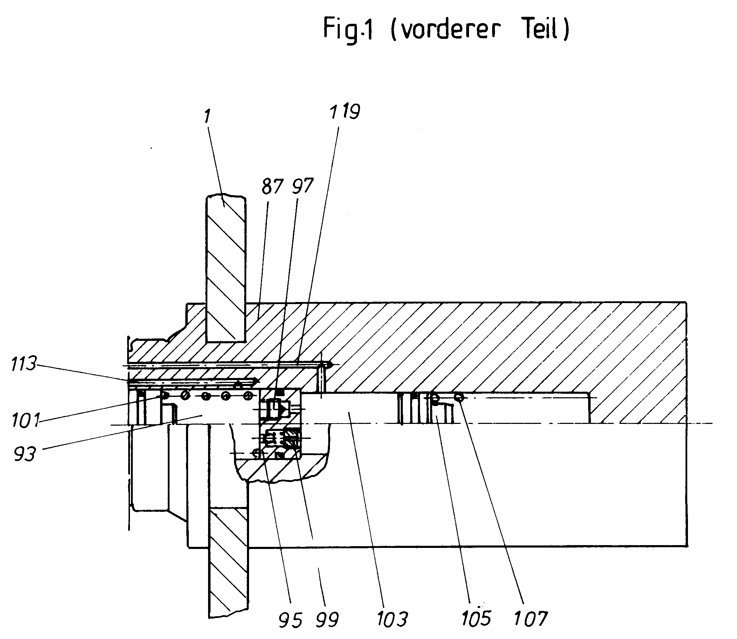

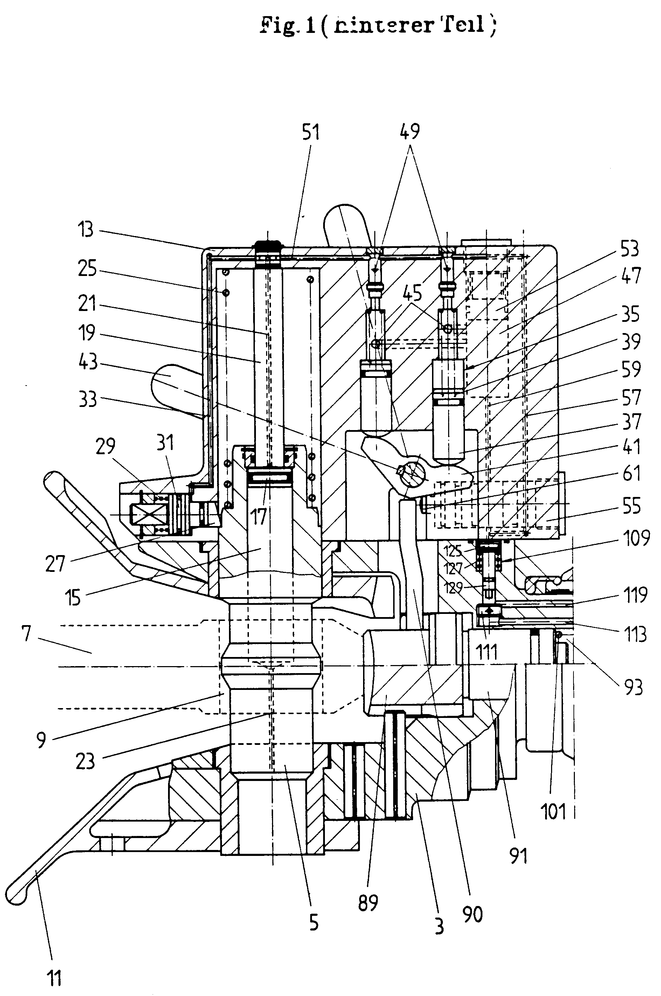

- Fig. 1: den auf zwei Zeichnungsblätter verteilten Längsschnitt einer erfindungsgemäßen Anhänger-Bolzenkupplung;

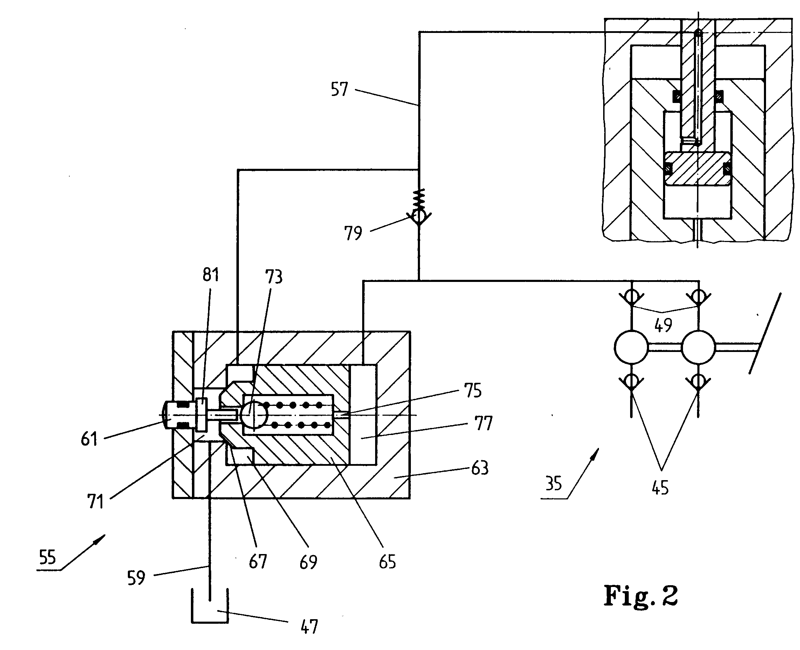

- Fig. 2: das Löseventil im Längsschnitt nebst seiner Einschaltung in das hydraulische System.

Die am Fahrzeugrahmen 1 befestigte Anhänger-Bolzenkupplung besitzt einen Kupplungskörper 3, in dem ein Kupplungsbolzen 5 zum Erfassen der Zugstangenöse 9 der Zugstange 7 zwischen einer unteren Kuppelstellung und einer oberen Freigabestellung verschieblich ist. Am Kupplungskörper 3 ist ein Fangmaul 11 befestigt.

Auf dem Körper 3 sitzt ein Gehäuse 13, in welches das obere Ende des Kupplungsbolzens 5 ragt. In diesem ist eine Sackbohrung ausgeführt, welche den Zylinderraum 15 eines Hydraulikzylinders darstellt. In diesen greift von oben eine einen Kolben 17 tragende Kolbenstange 19, welche mit ihrem oberen Ende in der Decke des Gehäuses 13 starr befestigt ist.

Zur Einleitung des Betätigungsdrucks verläuft in der Kolbenstange 19 eine Bohrung 21, welche über eine dicht oberhalb des Kolbens 17 ausgeführte Querbohrung in den Stangenraum des Hydraulikzylinders 15 mündet.

Der Hydraulikzylinderraum 15 unterhalb des Kolbens 17 ist entlüftet oder gasgefüllt. Über eine Aufladebohrung 23 kann er mit einem als Gasfeder wirkenden Druckgas gefüllt werden.

In erster Linie dient zur Verschiebung des Kupplungsbolzens 5 nach unten in die Kuppelstellung eine Kuppelfeder 25, deren unteres Ende auf eine Abstufung des Kupplungsbolzens drückt und deren oberes Ende sich gegen die Decke des Gehäuses 13 abstützt.

Zur Verriegelung des Kupplungsbolzens 5 in der unteren Kuppelstellung dient ein von einer Druckfeder 29 beaufschlagter und durch einen Kolben 31 in einer Zylinderbohrung des Gehäuses 13 betätigbarer Sicherungsriegel 27, der in seiner vorderen Sperrstellung mit seinem Vorderende einen Absatz des Kupplungsbolzens 5 erfaßt. Ein Druckkanal 33 mündet in die Zylinderbohrung vor dem Kolben 31, um bei Druckbeaufschlagung den Sicherungsriegel 27 entgegen der Wirkung der Druckfeder 29 nach hinten in seine Entriegelungsstellung zu verschieben.

In der praktischen Ausführung wird man zwei solcher Sicherungsriegel 27 in der Querebene einander gegenüberliegend anordnen.

Eine hydraulische Handpumpe 35 erzeugt den Betätigungsdruck. Diese besteht aus zwei in Zylinderbohrungen im Gehäuse 13 verschieblichen Pumpkolben 37, deren jeder durch eine Feder 39 nach unten beaufschlagt ist. Die unteren Enden stutzen sich auf die beiden Arme eines zweiarmigen Betätigungsnockens 41, der im Gehäuse 13 gelagert und mittels eines Handpumphebels 43 hin und her verschwenkbar ist.

Die Räume oberhalb der Pumpkolben 37 haben über jeweils als Rückschlagventil ausgebildete, nur schematisch angedeutete Saugventile 45 Verbindung mit einem ebenfalls nur schematisch angedeuteten Hydraulikflüssigkeitsvorratsraum 47 und über Druckventile 49 Verbindung mit einem Betätigungsdruck-Kanalsystem 51, von dem sowohl die Bohrung 21 in der Kolbenstange 19 als auch der Druckkanal 33 des Sicherungsriegels 27 ausgeht.

Ein federbeaufschlagter Schwimmkolben 53 hält einen gewissen Mindestdruck im Hydraulikflüssigkeitsvorrat aufrecht.

Zur Beseitigung eines Drucks im Kanalsystem 51 dient ein Löseventil 55, zu dem eine vom Kanalsystem 51 ausgehende Rückflußbohrung 57 führt und welches diese bei seiner Betätigung mit einer zum Vorratsraum 47 führenden Abflußleitung 59 in Verbindung bringt. Die Betätigung geschieht durch Eindrücken eines Lösestifts 61 am hinteren Ende des Löseventils.

Das Löseventil besitzt einen, z.B. durch eine Bohrung im Gehäuse 13 gebildeten, Zylinder 63, in dem ein Sperrkolben 65 gleitet. Dessen abgesetztes hinteres Ende ist als Ventilsitz 67 ausgebildet und an eine zugehörige Ventilsitzfläche des Zylinders 63 andrückbar. Vor diesem Sitz ist zwischen ihm und der Zylinderwand ein Ringraum 69 gebildet, in den die Rückflußbohrung 57 mündet. Hinter dem Sitz ist ein Abflußraum 71 gebildet, von dem die Abflußleitung 59 ausgeht.

Der Sperrkolben 65 hat einen Hohlraum, in dem eine federbeaufschlagte Entlastungskugel 73 gegen eine in den Abflußraum 71 mündende, Bohrung gedrückt ist. An seinem hinteren Ende hat der Hohlraum des Sperrkolbens 65 über eine Bohrung 75 Verbindung mit dem vorderen Zylinderraum 77, der an die Handpumpe 35 angeschlossen ist und von dem ein Druckminderventil 79 zum Ringraum 69 führt.

Im Abflußraum 71 befindet sich ein Stößel 81, über den die Bewegung des Lösestifts 61 auf die Entlastungskugel 73 übertragen wird.

Das vordere Ende des Kupplungskörpers 3 ist von einem Halterohr 85 gebildet, welches in einem Lagergehäuse 87 drehbar gehalten ist, das seinerseits starr am Fahrzeugrahmen 1 befestigt ist. Im Halterohr ist eine Spielbeseitigungsvorrichtung eingebaut. Diese besteht aus einer auf die Zugstangenöse 9 wirkenden Andrückklaue 89, einem diese beaufschlagenden Hochdruckkolben 91, einem vor diesem gelegenen Hochdruckraum 93, einer den vorderen Abschluß des Hochdruckraums bildenden Trennwand 95, in der ein als Rückschlagventil ausgebildetes Nachsaugventil 97 und ein Überdruckventil 99 eingebaut sind, einer zwischen dem Hochdruckkolben 91 und der Trennwand 95 wirkenden Druckfeder 101, einem vor der Trennwand gelegenen Niederdruckraum 103, einem diesen nach vorn abschließenden Vordruckkolben 105 und einer diesen vorderseitig beaufschlagenden Feder 107.

Der Hochdruckraum 93 ist über ein Entlastungsventil 109 mit dem Niederdruckraum 103 verbindbar. Dieses Entlastungsventil sitzt in einer Ausbohrung des Kupplungskörpers 3 und ist oben abgeschlossen durch die dicht aufgesetzte Unterfläche des Gehäuses 13.

Das Entlastungsventil 109 ist ein entsperrbares Rückschlagventil 111, dessen Hochdruckanschluß 113 mit dem Hochdruckraum 93 und dessen Niederdruckanschluß 119 mit dem Niederdruckraum 103 über im Halterohr 85 ausgeführte Kanäle Verbindung hat. Mit diesem zusammen wirkt ein Betätigungskolben 125, der beaufschlagt ist vom im Kanalsystem 51 herrschenden Betätigungsdruck. Wenn dieser den Betätigungskolben 125 entgegen der Wirkung einer Feder 127 nach unten bewegt, stößt er mit einem nach unten ragenden Stößel 129 das Rückschlagventil 111 auf.

Ein starr an der Andrückklaue 89 aufragender Finger 90 wirkt mit seinem oberen Ende mit dem Lösestift 61 des Löseventils zusammen.

Die beschriebene Anhänger-Bolzenkupplung funktioniert wie folgt:

Im Fahrbetrieb ist die Zugstange 7 eines Anhängers von der Anhängerkupplung des Zugfahrzeugs durch den durch ihre Öse 9 greifenden Kupplungsbolzen 5 erfaßt. Die zu Beginn einer Fahrt wegen des notwendigen Spiels des Kupplungsbolzens in der Zugstangenöse auftretenden Schwing- und Stoßbewegungen der Zugstangenöse in Fahrtrichtung übertragen sich über die Andrückklaue 89 auf den Hochdruckkolben 91, der unter der Wirkung der Druckfeder 101 diesen Bewegungen folgt. Diese Bewegungen wiederum wirken als Pumpenhübe, welche Hydraulikflüssigkeit aus dem Niederdruckraum 103 über das Nachsaugventil 97 in den Hochdruckraum 93 nachsaugen, so daß sich in letzterem ein Hochdruck aufbaut, der schließlich zu einem Andrücken der Zugstangenöse 9 an den Kupplungsbolzen durch die Andrückklaue 89 führt, bis das Spiel zuverlässig beseitigt ist und kein Rattern und Stoßen mehr stattfindet. Das Überdruckventil 99 verhindert den Aufbau eines übermäßigen Überdrucks.

Wenn der Anhänger abgekuppelt werden soll, betätigt der Bedienungsmann den Handpumphebel 43, so daß sich ein Betätigungsdruck im Kanalsystem 51 und den von diesem abgehenden Bohrungen aufbaut. Der das Entlastungsventil 109, nämlich dessen Betätigungskolben 125 beaufschlagende Druck führt dazu, daß das Rückschlagventil 111 durch den niedergehenden Stößel 129 entsperrt wird, wodurch der Hochdruckraum 93 in Verbindung mit dem Niederdruckraum 103 kommt und die Andrückkraft der Andrückklaue 89 auf die geringe Restkraft der Druckfeder 101 absinkt.

Weiterhin wirkt der Betätigungsdruck über den Druckkanal 33 auf den Sicherungsriegel 27 im Sinne von dessen Ausfahren in die Entriegelungsstellung, so daß der Kupplungsbolzen 5 freigegeben wird. Die durch die Bohrung 21 in den Stangenraum des Hydraulikzylinderraums 15 oberhalb des Kolbens 17 einströmende Hydraulikflüssigkeit bewegt den Kupplungsbolzen 5 nach oben, bis in dessen oberer Endlage die Zugstangenöse 9 freikommt, das Pumpen beendet und der Anhänger weggerollt werden kann.

Sollte sich bei Beginn des beschriebenen Pumpens der Sperrkolben 65 des Löseventils 55 in der Offenstellung befunden haben, so bestünde die Gefahr, daß die gepumpte Hydraulikflüssigkeit ohne Widerstand über den Ringraum 69, den offenen Ventilsitz 67 und die Abflußleitung 59 in den Vorratsraum 47 zurückfließt und sich kein Druck aufbauen kann. Dies ist jedoch verhindert durch das Druckminderventil 79, welches die Wirkung hat, daß sich zunächst im vorderen Zylinderraum 77 des Löseventils 55 ein Druck aufbaut, welcher dieses zum Schließen bringt.

Mit dem Kupplungsbolzen 5 in der oberen Endstellung befindet sich die Anhängerkupplung in der Ankupplungs-Bereitschaftsstellung und das Kanalsystem 51 steht unter dem Druck, den die gespannte Kuppelfeder 25 (und ggfs. das unterhalb des Kolbens 17 vorhandene gespannte Gas) im Stangenraum des Hydraulikzylinderraums 15 bewirkt.

Wenn jetzt ein Anhänger angekuppelt werden soll, wird dessen Zugstange 7 in das Fangmaul 11 eingeführt, bis die Zugstangenöse 9 auf die Spielbeseitigungs-Andrückklaue 89 trifft und diese entgegen der Wirkung der verhältnismäßig schwachen Druckfeder 101 etwas nach vorn bewegt. Diese Bewegung wird vom Finger 90 auf das Löseventil 55 übertragen, indem zunächst über den Lösestift 61 der Stößel 81 die Entlastungskugel 73 abhebt, so daß der Druck im vorderen Zylinderraum 77 zusammenbricht. Dadurch wird dem anschließenden Abheben auch des Sperrkolbens 65 von seinem Ventilsitz 67 kein Widerstand entgegengesetzt bzw. dieser hebt unter der Wirkung des Drucks im Ringraum 69 selbsttätig ab, so daß der Druck auch in der Rückflußbohrung 57 abfällt und die Kuppelfeder 25 den Kupplungsbolzen 5 nach unten in die Kuppelstellung schieben kann, wobei die Hydraulikflüssigkeit aus dem Stangenraum des Hydraulikzylinderraums 15 verdrängt wird und über das Löseventil 55 in den Vorratsraum 47 zurückfließt.

Wenn die untere Lage des Kupplungsbolzens 5 erreicht wird, rastet der Sicherungsriegel 27 unter der Wirkung seiner Druckfeder 29 wieder über dem zugehörigen Absatz des Kupplungsbolzens 5 ein und dieser ist in seiner Kuppelstellung gesichert.

## Patentansprüche

1. Anhänger-Bolzenkupplung mit einem im Kupplungskörper (3) in senkrechter Richtung verschieblichen Kupplungsbolzen (5), der von einer Kuppelfeder (25) im Sinne der Abwärtsbewegung in seine Kuppelstellung beaufschlagt ist und unter der Wirkung des Drucks eines Arbeitsmediums nach oben in seine Freigabestellung verschieblich ist,
dadurch gekennzeichnet, daß der Aufwärtsverschiebeantrieb ein Hydraulikzylinder ist, dessen Zylinderraum (15) von einer Sackbohrung im Kupplungsbolzen (5) gebildet ist und dessen Kolben (17) an einer hängenden, starr befestigten Kolbenstange (19) befestigt ist, wobei die Druckbeaufschlagung über eine in der Kolbenstange (19) verlaufende, oberhalb des Kolbens (17) in den Stangenraum des Hydraulikzylinderraums (15) mündenden Bohrung (21) erfolgt.

2. Anhänger-Bolzenkupplung nach Anspruch 1, gekennzeichnet durch wenigstens einen den Kupplungsbolzen (5) in seiner Kuppelstellung arretierenden Sicherungsriegel (27), der in Richtung seiner Verriegelungsstellung federbeaufschlagt ist und in Richtung der Entriegelungsstellung hydraulisch betätigbar ist, wobei sein Druckbeaufschlagungsraum Verbindung mit dem des Kupplungsbolzens (5) hat.

3. Anhänger-Bolzenkupplung nach Anspruch 1 oder 2, gekennzeichnet durch eine Handpumpe (35) zur Erzeugung der Druckbeaufschlagung.

4. Anhänger-Bolzenkupplung nach Anspruch 3, dadurch gekennzeichnet, daß der Pumpenhebel (43) seitlich am Kupplungsgehäuse (13) gelagert ist und über einen zweiarmigen Betätigungsnocken (41) abwechselnd zwei Pumpkolben (37) im Sinne des Ausstoßens von Hydraulikflüssigkeit beaufschlagt, wobei das Nachsaugen von Hydraulikflüssigkeit durch die Pumpkolben (37) rückstellende Federn (39) erfolgt.

5. Anhänger-Bolzenkupplung nach einem oder mehreren der vorhergehenden Ansprüche; dadurch gekennzeichnet, daß der Zylinderraum (15) im Kupplungsbolzen (5) unterhalb des Kolbens (17) mit einem vorgespannten Gas gefüllt ist, welches die den Kupplungsbolzen nach unten in die Kuppelstellung beaufschlagende Federwirkung unterstützt oder ersetzt.

6. Anhänger-Bolzenkupplung nach einem oder mehreren der vorhergehenden Ansprüche, gekennzeichnet durch ein Löseventil (55), das bei seiner Betätigung den Weg der den Hydraulikzylinder (15) beaufschlagenden Druckflüssigkeit zum Rückfluß freigibt.

7. Anhänger-Bolzenkupplung nach Anspruch 6, dadurch gekennzeichnet, daß das Löseventil (55) zur Betätigung durch die in den Kupplungskörper (3) eintretende Zugstangenöse (9) der Anhängerzugstange (7) eingerichtet ist.

8. Anhänger-Bolzenkupplung nach Anspruch 6 und/oder 7, dadurch gekennzeichnet, daß das Löseventil (55) einen durch den Betätigungsdruck in seiner Sperrstellung gehaltenen Sperrkolben (65) aufweist, in dem eine federbeaufschlagte Entlastungskugel (73) im gleichen Sinne sperrt,
wobei die mechanische Auslösebewegung über einen Stößel (81) zuerst auf die Entlastungskugel (73) und danach auf den Sperrkolben (65) übertragen wird.

9. Anhänger-Bolzenkupplung nach Anspruch 7 und/oder 8, gekennzeichnet durch eine die Zugstangenöse (9) zur Spielbeseitigung im Fahrbetrieb gegen den Kupplungsbolzen (5) drückende Andrückklaue (89) einer Spielbeseitigungsvorrichtung, wobei die Andrückklaue (89) mit dem Löseventil (55) in Wirkverbindung steht.

10. Anhänger-Bolzenkupplung nach Anspruch 9, gekennzeichnet durch einen von der Andrückklaue (89) aufragenden Finger (90) zur Herstellung der Wirkverbindung.

11. Anhänger-Bolzenkupplung nach Anspruch 9 und/oder 10, dadurch gekennzeichnet, daß die Andrückklaue (89) im Fahrbetrieb durch den Flüssigkeitsdruck in einem Hochdruckraum (93) beaufschlagt ist, und daß dieser Hochdruckraum (93) über ein von einem Entlastungsventil (109) beherrschten Kanal mit einem Niederdruckraum (103) in Verbindung steht, wobei das Entlastungsventil (109) durch den den Kupplungsbolzen (5) beaufschlagenden Arbeitsmediumdruck ansteuerbar ist.

12. Anhänger-Bolzenkupplung nach Anspruch 11, dadurch gekennzeichnet, daß der Druck im Hochdruckraum (93) sich im Fahrbetrieb durch Nachsaugen aus dem Niederdruckraum (103) über ein Nachsaug-Rückschlagventil (97) aufbaut.

## Claims

1. Trailer bolt coupling having a coupling bolt (5) which can be shifted in an upwardly extending direction in the coupling body (3) and is acted upon by a coupling spring (25) in the direction of the downwards movement into its coupling position and can be shifted upwards into its release position under the action of the pressure of a working medium,
characterised in that the upward-shifting mechanism is a hydraulic cylinder, the cylinder space (15) of which is formed by a blind bore in the coupling bolt (5) and the piston (17) of which is fastened to a suspended, rigidly fastened piston rod (19), with the pressure loading taking place by way of a bore (21) which extends in the piston rod (19), above the piston (17), and opens out into the rod space of the hydraulic cylinder space (15).

2. Trailer bolt coupling according to claim 1, characterised by at least one safety bar (27) which secures the coupling bolt (5) in the coupling position and is spring-loaded in the direction of its locking position and can be hydraulically actuated in the direction of the unlocking position, with the pressure-loading space of said safety bar being connected to that of the coupling bolt (5).

3. Trailer bolt coupling according to claim 1 or 2, characterised by a hand pump (35) for producing the pressure load.

4. Trailer bolt coupling according to claim 3, characterised in that the pump lever (43) is mounted on the side of the coupling housing (13) and by way of a two-arm actuating cam (41) acts in an alternating manner on two pump pistons (37) in the direction of the discharge of hydraulic fluid, with the sucking back of the hydraulic fluid taking place by means of springs (39) which reset the pump pistons (37).

5. Trailer bolt coupling according to one or more of the preceding claims, characterised in that the cylinder space (15) in the coupling bolt (5) beneath the piston (17) is filled with a prestressed gas, which supports or replaces the spring action which presses the coupling bolt downwards into the coupling position.

6. Trailer bolt coupling according to one or more of the preceding claims, characterised by a release valve (55), which when actuated releases for the return flow the path of the pressure fluid which acts upon the hydraulic cylinder (15).

7. Trailer bolt coupling according to claim 6, characterised in that for actuation, the release valve (55) is set by the tow bar eye (9) of the trailer tow bar (7), which tow bar eye enters into the coupling body (3).

8. Trailer bolt coupling according to claim 6 and/or 7, characterised in that the release valve (55) has a locking piston (65), which is held in its locking position by the actuating pressure and in which locking piston a spring-loaded relief ball (73) locks in the same direction, with the mechanical disengaging movement being transferred by way of a push rod (81), first of all to the relief ball (73) and then to the locking piston (65).

9. Trailer bolt coupling according to claim 7 and/or 8, characterised by a pressing claw (89) of a clearance-eliminating device, which pressing claw presses the tow bar eye (9) against the coupling bolt (5) in order to eliminate clearance during operation, with the pressing claw (89) being operatively connected to the release valve (55).

10. Trailer-coupling bolt according to claim 9, characterised by a finger (90) which protrudes from the pressing claw (89) for producing the operative connection.

11. Trailer bolt coupling according to claim 9 and/or 10, characterised in that during operation the pressing claw (89) is acted upon by the fluid pressure in a high-pressure space (93), and in that this high-pressure space (93) is connected by way of a duct, which is controlled by a relief valve (109), to a low-pressure space (103), with it being possible to trigger the relief valve (109) by means of the working-medium pressure which acts upon the coupling bolt (5).

12. Trailer bolt coupling according to claim 11, characterised in that the pressure in the high-pressure space (93) builds up during operation by sucking back from the low-pressure space (103) by way of a suck-back return-flow valve (97).

## Revendications

1. Accouplement à broche pour remorque, comportant une broche (5) d'accouplement qui est mobile dans la direction verticale dans un corps (3) d'accouplement, est sollicitée dans le sens de la descente, dans sa position d'accouplement, par un ressort (25) d'accouplement et peut être déplacée vers le haut, dans sa position d'ouverture, sous l'action de la pression d'un fluide de travail, caractérisé par le fait que le moyen de déplacement vers le haut est un vérin hydraulique dont la chambre (15) de vérin est formée par un trou non débouchant dans la broche (5) d'accouplement et dont le piston (17) est fixé à une tige (19) de piston suspendue, fixée rigidement, la pression étant appliquée à travers un trou (21) dans la tige (19) de piston, qui débouche dans la chambre côté tige de piston de la chambre (15) de vérin hydraulique, au-dessus du piston (17).

2. Accouplement à broche pour remorque selon la revendication 1, caractérisé par au moins un verrou (27) de sécurité qui bloque la broche (5) d'accouplement dans sa position d'accouplement, est sollicité par un ressort dans la direction de sa position de verrouillage et peut être actionné hydrauliquement en direction de la position de déverrouillage, sa chambre d'application de pression communiquant avec la chambre de pression dans la broche (5) d'accouplement.

3. Accouplement à broche pour remorque selon la revendication 1 ou 2, caractérisé par une pompe (35) manuelle pour la production de la pression de commande.

4. Accouplement à broche pour remorque selon la revendication 3, caractérisé par le fait que le levier (43) de pompe est monté latéralement sur le corps (13) d'accouplement et commande alternativement, par l'intermédiaire d'une came (41) d'actionnement à deux bras, deux pistons (37) de pompe dans le sens du refoulement de liquide hydraulique, les ressorts (39) de rappel des pistons (37) de pompe assurant l'aspiration de liquide hydraulique.

5. Accouplement à broche pour remorque selon une ou plusieurs des revendications précédentes, caractérisé par le fait que la chambre (15) de vérin dans la broche (5) d'accouplement en-dessous du piston (17) est remplie d'un gaz sous pression qui renforce ou remplace l'action du ressort sollicitant la broche d'accouplement vers le bas, dans la direction d'accouplement.

6. Accouplement à broche pour remorque selon une ou plusieurs des revendications précédentes, caractérisé par une valve (55) d'ouverture qui, lorsqu'elle est actionnée, libère le passage du liquide de pression agissant sur le vérin (15) hydraulique vers le retour.

7. Accouplement à broche pour remorque selon la revendication 6, caractérisé par le fait que la valve (55) d'ouverture est agencée en vue de son actionnement par l'anneau (9) de la barre (7) d'attelage de la remorque entrant dans le corps (3) d'accouplement.

8. Accouplement à broche pour remorque selon la revendication 6 et/ou la revendication 7, caractérisé par le fait que la valve (55) d'ouverture présente un piston (65) de verrouillage qui est maintenu dans sa position de verrouillage par la pression d'actionnement et dans lequel un clapet de décharge (73) à bille sollicité par ressort est bloquant dans le même sens, le mouvement mécanique de déclenchement étant transmis par l'intermédiaire d'un poussoir (81) à la bille (73) du clapet de décharge puis au piston de verrouillage (65).

9. Accouplement à broche pour remorque selon la revendication 7 et/ou la revendication 8, caractérisé par un piston (89) presseur d'un dispositif d'élimination du jeu qui, en déplacement, presse l'anneau (9) de barre d'attelage contre la broche (5) d'accouplement aux fins d'éliminer le jeu, une liaison active existant entre le piston (89) presseur et la valve (55) d'ouverture.

10. Accouplement à broche pour remorque selon la revendication 9, caractérisé par un doigt (90) qui fait saillie sur le piston (89) presseur aux fins de réaliser la liaison active.

11. Accouplement à broche pour remorque selon la revendication 9 et/ou la revendication 10, caractérisé par le fait que le piston (89) presseur, en déplacement, est sollicité par la pression du liquide dans une chambre (93) à haute pression et par le fait que cette chambre (93) à haute pression communique avec une chambre (103) à basse pression par un canal qui est contrôlé par une soupape (109) de décharge, la soupape (109) de décharge pouvant être commandée par la pression du fluide de travail qui agit sur la broche (5) d'accouplement.

12. Accouplement à broche pour remorque selon la revendication 11, caractérisé par le fait que la pression dans la chambre (93) à haute pression est établie en déplacement par aspiration dans la chambre (103) à basse pression à travers une valve (97) anti-retour d'aspiration.
